# EUROPÄISCHE PATENTANMELDUNG

(11) **EP 2 907 968 A1**
(43) Veröffentlichungstag der Anmeldung: **19.08.2015**
(21) Anmeldenummer: 14154884.2
(22) Anmeldetag: 12.02.2014
(51) Int. Cl.: E21D 9/00, E04G 23/02, E21D 11/04, B29C 47/00

(54) **Vorrichtung und Verfahren zur Injektion eines thermoplastischen Kunststoffs**

(71) Anmelder: Züblin Spezialtiefbau Ges.m.b.H., 1220 Wien (AT)
(72) Erfinder: Hornich, Wolfgang, 2353 Guntramsdorf (AT)
(74) Vertreter: Liedtke, Markus

(57) **Zusammenfassung**

Die Erfindung betrifft eine Vorrichtung (1) zur Injektion eines thermoplastischen Kunststoffs in eine Bauwerkkonstruktion und/oder in einen Baugrund, umfassend eine Fördereinrichtung (3) für ein aufzuschmelzendes Granulat und eine Aufschmelzvorrichtung (4) für das Granulat. Dabei ist vorgesehen, dass die Fördereinrichtung (3) eine Förderschnecke (3.1) zum Fördern des Granulats umfasst und dass die Aufschmelzvorrichtung (4) eine Anzahl von Heizelementen (4.1) umfasst, die an einem Gehäuse (3.3) der Fördereinrichtung (3) angeordnet ist.

Weiterhin betrifft die Erfindung ein Verfahren zur Injektion eines thermoplastischen Kunststoffs in eine Bauwerkkonstruktion und/oder in einen Baugrund, insbesondere mittels einer Vorrichtung (1).

## Beschreibung

Die Erfindung betrifft eine Vorrichtung zur Injektion eines thermoplastischen Kunststoffs in eine Bauwerkkonstruktion und/oder in einen Baugrund gemäß dem Oberbegriff des Anspruchs 1. Weiterhin betrifft die Erfindung ein Verfahren zur Injektion eines thermoplastischen Kunststoffs in eine Bauwerkkonstruktion und/oder in einen Baugrund.

Die DE 101 48 533 A1 offenbart ein Verfahren zur Abdichtung von Spalten in Gestein oder Bauwerken, insbesondere Tunneln, bei dem über ein oder mehrere abgedichtete Bohrlöcher Dichtmasse unter Druck in kaltes oder vorgewärmtes Gestein oder Baumaterial eingebracht wird. Dabei wird eine Mischung aus im wesentlichem einem anorganischen Feststoff und einem geschmolzenen organischen Bindemittel unter Druck über das Bohrloch in das Gestein oder Baumaterial eingepresst und verfestigt sich in dessen Spalten, so dass diese gegen Wasser abgedichtet sind.

Weiterhin sind in der EP 1 428 952 A1 ein Verfahren und eine Vorrichtung zur Bodenverfestigung und zur Abdichtung von Spalten in Gesteinen oder Bauwerken offenbart, bei dem über ein oder mehrere abgedichtete Bohrlöcher ein oberhalb ungefähr 100°C schmelzendes Material bei einer Temperatur, bei der es dünnflüssig vorliegt, unter Druck in kalten oder vorgewärmten Boden oder kaltes oder vorgewärmtes Gestein oder Baumaterial injiziert wird, wobei es sich bei dem schmelzbaren Material um eine reine schmelzbare Substanz, eine Mischung aus schmelzbaren Substanzen oder eine Mischung aus schmelzbaren und bei der Verfahrenstemperatur der Injektion unschmelzbaren Substanzen handelt. Dabei wird der schmelzbare Feststoff vor Erreichen der maximalen Verfahrenstemperatur von Sauerstoff und/oder anderen schädigenden Substanzen, die die Polymermoleküle der Schmelze bei der maximalen Verfahrenstemperatur sonst angreifen oder spalten würden, weitgehend befreit oder der Zutritt solcher schädigenden Stoffe zu der Schmelze in der Apparatur wird verwehrt, wodurch es möglich ist die maximale Verfahrenstemperatur um 5 bis 50°C anzuheben, mit den dadurch bedingten Vorteilen der geringeren Viskosität und längeren Fließbarkeit.

Darüber hinaus ist aus der EP 1 108 115 B1 ein Verfahren zur Abdichtung von Bauwerkskonstruktionen, Mauern und Hohlräumen im Boden, Gestein bzw. im Gebirge, insbesondere Tunnel, Stollen, Schächte, Kanäle und Kavernen bekannt, wobei über ein abgedichtetes Bohrloch Dichtungsmaterial unter Druck in das Gestein eingebracht wird. Dabei werden erhitzte Polyamide unter Druck über das Bohrloch in das Gestein bzw. Baumaterial eingepresst, wobei sie in Klüfte und Poren des abzudichtenden Gesteins bzw. Baumaterials eindringen und diese nach Abkühlung abdichten und dauerhaft verschlossen werden.

Eine Injektionseinheit zum Einbringen derartiger Polyamide ist aus dem Stand der Technik bekannt, wobei die Injektionseinheit eine beheizbare Lochplatte umfasst, auf der das Polyamid in Granulatform mit einem Pneumatikzylinder auf diese gedrückt wird. Das Granulat wird dabei aufgeschmolzen und rinnt in einen unter der Lochplatte angeordneten, ebenfalls beheizten Vorratsbehälter. Die Injektion des Polyamids erfolgt über eine im Vorratsbehälter angeordnete Zahnradpumpe und beheizbare Injektionsschläuche, welche den Vorratsbehälter mit einem sogenannten Injektionspacker zur Injektion des Polyamids in einen Injektionsbereich verbindet.

Der Erfindung liegt die Aufgabe zu Grunde, eine gegenüber dem Stand der Technik verbesserte Vorrichtung und ein verbessertes Verfahren zur Injektion eines thermoplastischen Kunststoffs in eine Bauwerkkonstruktion und/oder in einen Baugrund anzugeben.

Hinsichtlich der Vorrichtung wird die Aufgabe erfindungsgemäß durch die in Anspruch 1 angegebenen Merkmale und hinsichtlich des Verfahrens durch die in Anspruch 10 angegebenen Merkmale gelöst.

Eine Vorrichtung zur Injektion eines thermoplastischen Kunststoffs in eine Bauwerkkonstruktion und/oder in einen Baugrund umfasst eine Fördereinrichtung für ein aufzuschmelzendes Granulat und eine Aufschmelzvorrichtung für das Granulat. Erfindungsgemäß ist vorgesehen, dass die Fördereinrichtung eine Förderschnecke zum Fördern des Granulats umfasst und dass die Aufschmelzvorrichtung eine Anzahl von Heizelementen umfasst, die an einem Gehäuse der Fördereinrichtung angeordnet ist.

Die Heizelemente ermöglichen ein zumindest teilweises, vorzugsweise vollständiges, Aufschmelzen des Granulats bereits in der Fördereinrichtung, wodurch ein gegenüber dem Stand der Technik reduzierter Energieverbrauch bei zumindest gleichbleibender, vorzugsweise gesteigerter, Förderleistung möglich ist. Der Energiebedarf beträgt beispielsweise 40 Kilowatt, wobei eine Förderleistung von bis zu 5,0 Liter pro Minute erreicht wird. Das Granulat ist bevorzugt aus einem thermoplastischen Kunststoff gebildet, welches bei einem jeweiligen Durchmesser der einzelnen Granulatkörner von 0,3 Millimeter bis 0,5 Millimeter und Schmelztemperaturen von 120°C bis maximal 160°C eine optimale Viskosität zur Injektion in die Bauwerkkonstruktion und/oder in den Baugrund erreicht.

Die Heizelemente der Fördereinrichtung sind dabei auf einer Außenseite des Gehäuses angeordnet, welches vorzugsweise aus einem gut wärmeleitfähigen Material, z. B. Metall, gebildet ist. Die Heizelemente selbst sind elektrisch betrieben. Eine von den Heizelementen erzeugte Wärme wird dabei über das Gehäuse an die Förderschnecke weitergeleitet, so dass das Granulat in der Förderschnecke gefördert und gleichzeitig erwärmt wird, wobei das Granulat bei Erwärmung ab einer bestimmten Schmelztemperatur aufschmilzt.

Zum Fördern des Granulats ist die Förderschnecke mittels einer Antriebseinrichtung antreibbar. Beispielsweise ist die Antriebseinheit aus einem Elektromotor gebildet, welcher die Förderschnecke derart antreibt, dass diese um ihre Längsachse rotiert. Mittels der Antriebseinrichtung ist eine automatische Rotation der Förderschnecke möglich.

In einer bevorzugten Ausführungsform der Erfindung weist die Vorrichtung einen Drucksensor zur Erfassung eines Förderdrucks auf, wobei der Drucksensor in und/oder an einem Auslassbereich der Fördereinrichtung angeordnet ist. Der zu erfassende Förderdruck beschreibt dabei einen Druck, mit welchem das zumindest teilweise aufgeschmolzene Granulat aus der Fördereinrichtung heraus befördert wird. Der erfasste Druck kann vorzugsweise einem Nutzer der Vorrichtung z. B. über eine Anzeigevorrichtung angezeigt werden. Damit ist eine vorzugsweise kontinuierliche Drucküberwachung der Fördereinrichtung möglich.

Die Vorrichtung umfasst weiterhin einen der Förderschnecke nachgeordneten regel- und/oder steuerbaren Injektionsschlauch, über welchen das aufgeschmolzene Granulat in die Bauwerkkonstruktion und/oder in den Baugrund injiziert wird. In einer bevorzugten Ausführung der Erfindung weist der Injektionsschlauch dabei zumindest zwei getrennt voneinander regel- und/oder steuerbare Heizabschnitte auf. In einem ersten Heizabschnitt wird die Temperatur des zumindest teilweise aufgeschmolzenen Granulats kontinuierlich erhöht und verbleibt dann in einem zweiten Heizabschnitt auf einem konstanten Niveau. Zur Realisierung der Heizabschnitte weist der Injektionsschlauch beispielsweise Heizmanschetten auf, welche den Injektionsschlauch umgeben.

Die Fördereinrichtung und der Injektionsschlauch sind vorzugsweise mittels einer Flanschverbindung kraft- und formschlüssig miteinander verbunden, so dass eine mechanisch stabile Verbindung zwischen der Fördereinrichtung und dem Injektionsschlauch hergestellt ist.

Weiterhin umfasst die Vorrichtung einen Injektionspacker, welcher mit dem Injektionsschlauch verbunden und in einem in die Bauwerkkonstruktion und/oder in den Baugrund eingebrachten Bohrloch angeordnet ist. Der Injektionspacker dient dabei insbesondere einer Abdichtung des Bohrlochs gegen einen Wiederaustritt des injizierten thermoplastischen Kunststoffs.

Bei einem Verfahren zur Injektion eines thermoplastischen Kunststoffs in eine Bauwerkkonstruktion und/oder in einen Baugrund, insbesondere mittels einer zuvor beschriebenen Vorrichtung, wird ein Granulat gefördert und aufgeschmolzen. Erfindungsgemäß wird das Granulat einer Förderschnecke zugeführt, wobei das Granulat mittels einer Fördereinrichtung mit einer Förderschnecke gefördert und gleichzeitig mittels einer Aufschmelzvorrichtung, die eine Anzahl von Heizelementen umfasst, die an einem Gehäuse der Fördereinrichtung angeordnet ist, zumindest teilweise aufgeschmolzen. Es hat sich für die Förderleistung als sehr vorteilhaft erwiesen, wenn das Granulat im Bereich der Förderschnecke derart aufgeschmolzen wird, dass erst am Ende der Förderschnecke das Granulat vollständig aufgeschmolzen ist. Es ist ebenfalls möglich, das Verfahren derart zu betreiben, dass am Ende der Förderschnecke das Granulat noch nicht vollständig aufgeschmolzen ist und erst durch weiteres Heizen im weiteren Verlauf der Förderung vollständig aufgeschmolzen wird.

Mittels des Verfahrens ist eine Förderzeit gegenüber Vorrichtungen mit separaten, außerhalb der Fördereinrichtung angeordneten Heizelementen, verkürzt. Zudem wird mittels der Förderung und gleichzeitigen Aufschmelzung des Granulats eine optimale Viskosität des zu injizierenden Kunststoffes erreicht, so dass die Qualität der Bauwerkkonstruktion und/oder des Baugrunds gegenüber dem Stand der Technik verbessert ist.

Eine Temperatur des aufzuschmelzenden Granulats wird dabei gemäß einer bevorzugten Ausführung der Erfindung im Bereich der Förderschnecke sowie in einem ersten regel- und/oder steuerbaren Abschnitt eines Injektionsschlauchs kontinuierlich erhöht und anschließend in einem zweiten regel- und/oder steuerbaren Abschnitt des Injektionsschlauchs weitestgehend konstant gehalten. Die kontinuierliche Erhöhung der Temperatur des aufzuschmelzenden Granulats ermöglicht eine optimale Aufschmelzung des Granulats, so dass ein möglichst homogener zu injizierender Kunststoff gebildet wird, der im weiteren Verlauf des Injektionsprozesses eine konstante Temperatur aufweist. Eine zwischenzeitliche Abkühlung des Kunststoffs wird damit weitestgehend vermieden, so dass die Qualität der Bauwerkkonstruktion und/oder des Baugrunds nicht oder zumindest nicht signifikant beeinträchtigt wird.

An einem Ende des Injektionsprozesses wird das vollständig aufgeschmolzene Granulat in Form eines nieder viskosen Kunststoffs in ein in die Bauwerkkonstruktion und/oder in den Baugrund eingebrachtes Bohrloch injiziert. Der injizierte Kunststoff dient dabei insbesondere einer nachträglichen Abdichtung der Bauwerkkonstruktion und/oder des Baugrunds, z. B. gegen ansteigendes Grundwasser.

Vorteilhafte Ausgestaltungen der Erfindung sind Gegenstand der Unteransprüche.

Ausführungsbeispiele der Erfindung werden im Folgenden anhand von Zeichnungen näher erläutert.

Darin zeigen:
- Figur 1: schematisch eine Schnittdarstellung einer Vorrichtung zur Injektion eines thermoplastischen Kunststoffs in eine Bauwerkkonstruktion und/oder in einen Baugrund,
- Figur 2: schematisch eine perspektivische Ansicht einer Fördereinrichtung der Vorrichtung aus Figur 1 und
- Figur 3: ein Koordinatensystem mit einem Temperaturverlauf eines aufzuschmelzenden Kunststoffgranulats innerhalb der in Figur 1 gezeigten Vorrichtung.

Einander entsprechende Teile sind in allen Figuren mit den gleichen Bezugszeichen versehen.

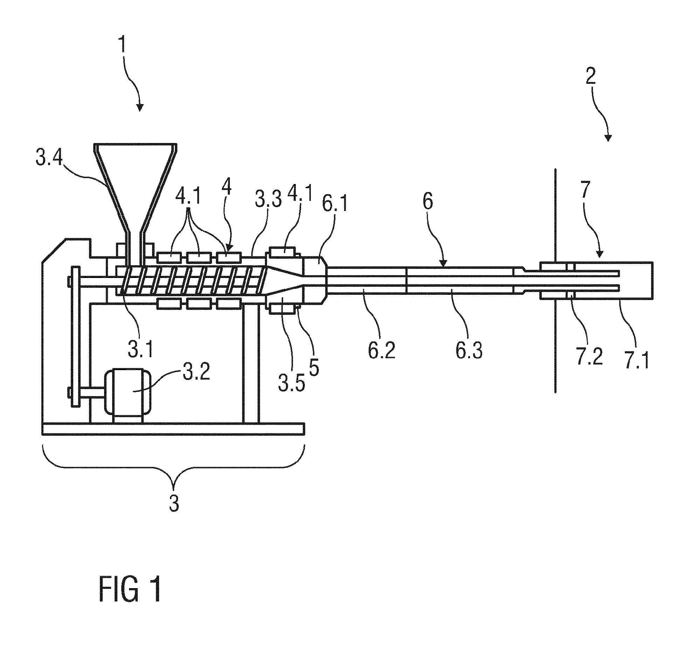

Figur 1 zeigt eine Schnittdarstellung, insbesondere einen Querschnitt einer Vorrichtung 1 zur Injektion eines thermoplastischen Kunststoffs in einen Injektionsbereich 2, wobei der Injektionsbereich 2 insbesondere eine Bauwerkkonstruktion und/oder einen Baugrund darstellt.

Die Vorrichtung 1 umfasst eine Fördereinrichtung 3, eine Aufschmelzvorrichtung 4, einen Drucksensor 5, einen Injektionsschlauch 6 und einen Injektionspacker 7.

Die Fördereinrichtung 3 weist eine Förderschnecke 3.1 auf, die von einer Antriebseinrichtung 3.2 angetrieben wird. Die Förderschnecke 3.1 ist aus einer um eine Achse rotierende Schneckenwelle und einem an dem Umfang der Schneckenwelle angeordneten Schneckengewinde gebildet, welches mit der Schneckenwelle stoffschlüssig verbunden, insbesondere verschweißt ist. Das Schneckengewinde kann dabei als ein fortlaufendes Gewinde oder als ein nicht durchgängiges Gewinde, bestehend aus einzelnen mit der Schneckenwelle verbundenen Elementen, gebildet sein.

Die Antriebseinheit 3.2 ist beispielsweise als ein Elektromotor ausgebildet, welcher mittels einer Wellenkupplung oder einem Kettentrieb mit der Förderschnecke 3.1 mechanisch gekoppelt ist. Des Weiteren ist die Antriebseinheit 3.2 mit einer nicht dargestellten elektronischen Steuereinheit gekoppelt, welche die Antriebseinheit 3.2, die Aufschmelzvorrichtung 4 und den Injektionsschlauch 6 ansteuert.

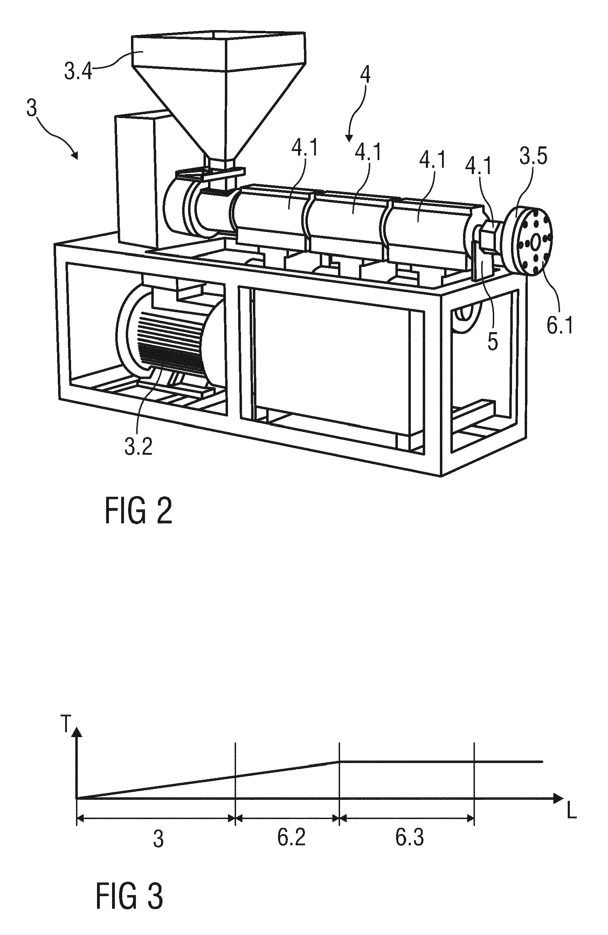

Weiterhin ist die Förderschnecke 3.1 in einem Gehäuse 3.3 angeordnet, zu dem sich die Schneckenwelle relativ bewegt, insbesondere dreht. Das Gehäuse 3.3 ist im Wesentlichen zylinderförmig ausgebildet und vorzugsweise aus einem metallischen Material gebildet, welches gute Wärmeleiteigenschaften aufweist. Dies ist insbesondere deshalb von Vorteil, da an einer äußeren Oberfläche des Gehäuses 3.3 eine Anzahl von Heizelementen 4.1 angeordnet ist, die der Aufschmelzvorrichtung 4 zugeordnet sind. Die Heizelemente 4.1 umschließen dabei das Gehäuse 3.3 zumindest abschnittsweise, wie es in Figur 2 gezeigt ist. Im vorliegenden Ausführungsbeispiel sind an dem Gehäuse 3.3 drei Heizelemente 4.1 angeordnet.

Die Heizelemente 4.1 sind vorzugsweise elektrisch mittels der Steuereinheit betreibbar und bilden einen eigenen Regelkreis zur Beheizung der Förderschnecke 3.1. Dazu sind die Heizelemente 4.1 entweder untereinander oder jeweils separat mit der Steuereinheit verbunden. Aufgrund des metallischen Materials des Gehäuses 3.3 kann die von den Heizelementen 4.1 erzeugte Wärme in ein Inneres des Gehäuses 3.3 und somit an die Förderschnecke 3.1 weitergeleitet werden. D. h. die derartige Ausbildung der Förderschnecke 3.1 ermöglicht eine Wärme abgebende Oberfläche, die einem mittels der Förderschnecke 3.1 zu fördernden Gut zugeführt werden kann. Das zu fördernde Gut ist im Rahmen der Anmeldung ein thermoplastisches Kunststoffgranulat, welches mittels der Fördereinrichtung 3 gefördert und gleichzeitig mittels der Aufschmelzvorrichtung 4 aufgeschmolzen wird. Bei dem Kunststoffgranulat kann es sich beispielsweise um Polyamid 6.6, auch als Nylon bekannt, Polyamid 6, auch als Perlon bekannt, oder dergleichen mehr handeln.

Das Kunststoffgranulat wird der Förderschnecke 3.1 mittels eines Trichters 3.4 zugeführt, dessen Hals in dem Gehäuse 3.3 angeordnet ist und der die Förderschnecke 3.1 mit einer Umgebung der Vorrichtung 1 verbindet.

An einem dem Injektionsschlauch 6 zugewandten Ende der Fördereinrichtung 3 ist ein erster Flansch 3.5 angeordnet, welcher eine trichterförmige Auslassöffnung aufweist, die sich konisch in Richtung des Injektionsschlauchs 6 verjüngt. An dem ersten Flansch 3.5 sind an einer Außenseite ein weiteres Heizelement 4.1 und ein Drucksensor 5 angeordnet. Der Drucksensor 5 erfasst einen Förderdruck, mit welchem das Kunststoffgranulat aus der Fördereinrichtung 3 heraus in den Injektionsschlauch 6 gefördert wird.

Vorzugsweise ist der Drucksensor 5 mit einer nicht dargestellten Anzeigeeinheit gekoppelt, welche den erfassten Druck kontinuierlich oder in diskreten Zeitabständen anzeigt. Damit ist eine Druckkontrolle der Fördereinrichtung 3 durch einen Nutzer der Vorrichtung 1 möglich.

Die Fördereinrichtung 3 ist mittels des ersten Flansches 3.5 und einem zweiten Flansch 6.1, welcher an einem der Fördereinrichtung 3 zugewandten Ende des Injektionsschlauchs 6 angeordnet ist, kraft- und formschlüssig mit dem Injektionsschlauch 6 verbunden. Der zweite Flansch 6.1 weist ebenfalls eine Öffnung zur Förderung des zumindest teilweise aufgeschmolzenen Kunststoffgranulats auf, wobei ein Durchmesser der Öffnung des zweiten Flansches 6.1 mit einem dem Injektionsschlauch 6 zugewandten endseitigen Durchmesser der Auslassöffnung des ersten Flansches 3.5 korrespondiert.

Der Injektionsschlauch 6 ist aus einem zumindest teilweise elastischen Material gebildet und in zwei getrennt voneinander regel- und/oder steuerbare Heizabschnitte 6.2, 6.3 unterteilt.

Ein erster Heizabschnitt 6.2 ist ein der Fördereinrichtung 3 zugewandter Abschnitt, in welchem das aufgeschmolzene Kunststoffgranulat kontinuierlich weiter erwärmt wird, wie es ein in Figur 3 gezeigter Temperaturverlauf des Kunststoffgranulats darstellt. In einem zweiten Heizabschnitt 6.3 wird eine Temperatur T des aufgeschmolzenen Kunststoffgranulats konstant auf einem bestimmten Wert gehalten, welcher eine optimale Viskosität zur Injektion in den Injektionsbereich 2 sicherstellt. Alternativ ist es möglich, dass am Ende der Förderschnecke 3 das aufzuschmelzende Kunststoffgranulat noch nicht vollständig aufgeschmolzen ist und erst durch weiteres Heizen im ersten Heizabschnitt 6.2 des Injektionschlauchs 6 vollständig aufgeschmolzen wird. Die Heizabschnitte 6.2, 6.3 werden mittels elektrisch betriebener Heizeinrichtungen, z. B. in Form von sogenannten Heizmanschetten, gebildet und sind jeweils mit der Steuereinheit der Vorrichtung 1 verbunden. Damit bilden die Heizabschnitte 6.2, 6.3 zwei unabhängig voneinander regel- und/oder steuerbare Regelkreise, die jeweils von dem Regelkreis der Aufschmelzvorrichtung 4 unabhängig sind. Eine Temperatur T der Heizabschnitte 6.2, 6.3 kann manuell oder aber auch automatisch vorgegeben werden.

Der Injektionsschlauch 6 ist an seinem dem Injektionsbereich 2 zugewandten Ende abschnittsweise in einem Injektionspacker 7 angeordnet, wobei dieser Abschnitt des Injektionsschlauches 6 mit einem Material versehen sein kann, welches gegenüber dem Material der Heizabschnitte 6.2, 6.3 in Bezug auf eine Festigkeit verstärkt ist.

Der Injektionspacker 7 weist ein Setzrohr 7.1 auf, welches in einem in den Injektionsbereich 2 eingebrachten Bohrloch angeordnet ist. In dem Setzrohr 7.1 ist ein Dichtelement 7.2 angeordnet, welches beispielsweise als ein expandierbarer Gummiring ausgebildet ist, der zwischen einem Außendurchmesser des Injektionsschlauchs 6 und einem Innendurchmesser des Setzrohrs 7.1 angeordnet ist. Das Dichtelement 7.2 dichtet dabei den Bereich zwischen Setzrohr 7.1 und einer Bohrlochwandung oder den Bereich zwischen Setzrohr 7.1 und Injektionspacker 7 gegenüber einem Wiederaustreten des in den Injektionsbereich 2 injizierten Kunststoffs ab.

Ein Betrieb der Vorrichtung 1 wird im Folgenden näher erläutert.

Über den Trichter 3.4 wird der Förderschnecke 3.1 ein thermoplastisches Kunststoffgranulat zugeführt, wobei ein Durchmesser einzelner Granulatgrößen z. B. 0,3 bis 0,5 Millimeter beträgt. Das Zuführen des Kunststoffgranulats kann dabei manuell oder maschinell erfolgen. Der Antrieb der Förderschnecke 3.1 erfolgt über die Antriebseinrichtung 3.2, welche zuvor gestartet wird.

Das Kunststoffgranulat wird mittels Rotieren der Schneckenwelle der Förderschnecke 3.1 in Richtung des Injektionsschlauchs 6 gefördert. Gleichzeitig wird das Kunststoffgranulat erwärmt und dabei zumindest teilweise aufgeschmolzen. Eine für eine oben beschriebene Granulatgröße erforderliche Schmelztemperatur liegt in einem Bereich zwischen 120°C und 160 C, welche die Heizelemente 4.1 abgeben. Das Kunststoffgranulat erwärmt sich dabei innerhalb der Fördereinrichtung 3 kontinuierlich, wie dies in Figur 3 gezeigt ist.

Das zumindest teilweise aufgeschmolzene Kunststoffgranulat wird anschließend aus der Fördereinrichtung 3 heraus in den Injektionsschlauch 6 gefördert, wobei der durch die Förderschnecke 3.1 bestimmbare Förderdruck mittels des Drucksensors 5 erfasst und mittels der nicht dargestellten Anzeigeeinheit angezeigt wird.

In dem ersten Heizabschnitt 6.2 des Injektionsschlauches 6 wird das zumindest teilweise aufgeschmolzene Kunststoffgranulat weiter erwärmt, wie es Figur 3 zeigt. Die Temperatur T des Kunststoffgranulats wird dabei bis zum Ende des ersten Heizabschnitts 6.2 kontinuierlich weiter erhöht. Die Temperatur T des Kunststoffgranulats am Ende des ersten Heizabschnitts 6.2 beträgt idealerweise einen Wert, welcher eine optimale Viskosität des zu injizierenden Kunststoffs ermöglicht.

Damit keine Temperaturerhöhung oder -reduktion des zu injizierenden Kunststoffs im weiteren Verlauf erfolgt, wird die Temperatur T des zu injizierenden Kunststoffs im zweiten Heizabschnitt 6.3 konstant auf einem Wert gehalten. Die Ansteuerung der Heizabschnitte 6.2, 6.3 erfolgt dabei mittels der Steuereinheit, wobei ein Sollwert von einem Nutzer der Vorrichtung 1 vorgebbar ist.

Abschließend wird der zu injizierende Kunststoff über das in dem Setzrohr 7.1 angeordnete Ende des Injektionsschlauchs 6 in den Injektionsbereich 2 z. B. mit einer Förderleistung von 5 Liter pro Minute eingebracht. Der Energiebedarf der Vorrichtung 1 ist dabei gegenüber dem Stand der Technik verringert und beträgt beispielsweise 40 Kilowatt.

Die Vorrichtung 1 dient insbesondere einer nachträglichen Abdichtung von Bauwerkkonstruktionen und/oder Baugründen z. B. gegen Wasser und/oder Feuchtigkeit, wobei eine großflächige Abdichtung der Bauwerkkonstruktion und/oder des Baugrundes ermöglicht wird, ohne dass dabei Untergrundstrukturen beschädigt werden.

Figur 2 zeigt eine perspektivische Ansicht der Fördereinrichtung 3 der Vorrichtung 1.

Figur 3 zeigt den Temperaturverlauf des Kunststoffgranulats innerhalb der Vorrichtung 1. Der Temperaturverlauf ist dabei in einem Koordinatensystem mit einer Abszisse und einer Ordinate angeordnet, wobei der Abszisse eine Längsausdehnung L der Vorrichtung und der Ordinate die Temperatur T zugeordnet ist.

### BEZUGSZEICHENLISTE

- 1: Vorrichtung
- 2: Injektionsbereich
- 3: Fördereinrichtung
- 3.1: Förderschnecke
- 3.2: Antriebseinrichtung
- 3.3: Gehäuse
- 3.4: Trichter
- 3.5: erster Flansch
- 4: Aufschmelzvorrichtung
- 4.1: Heizelement
- 5: Drucksensor
- 6: Injektionsschlauch
- 6.1: zweiter Flansch
- 6.2: erster Heizabschnitt
- 6.3: zweiter Heizabschnitt
- 7: Injektionspacker
- 7.1: Setzrohr
- 7.2: Dichtelement

- T: Temperatur
- L: Längsausdehnung der Vorrichtung

## Patentansprüche

1. Vorrichtung (1) zur Injektion eines thermoplastischen Kunststoffs in eine Bauwerkkonstruktion und/oder in einen Baugrund, umfassend eine Fördereinrichtung (3) für ein aufzuschmelzendes Granulat und eine Aufschmelzvorrichtung (4) für das Granulat,
**dadurch gekennzeichnet, dass** die Fördereinrichtung (3) eine Förderschnecke (3.1) zum Fördern des Granulats umfasst und dass die Aufschmelzvorrichtung (4) eine Anzahl von Heizelementen (4.1) umfasst, die an einem Gehäuse (3.3) der Fördereinrichtung (3) angeordnet ist.

2. Vorrichtung (1) nach Anspruch 1,
**dadurch gekennzeichnet, dass** die Heizelemente (4.1) auf einer Außenseite des Gehäuses (3.3) angeordnet sind.

3. Vorrichtung (1) nach Anspruch 1 oder 2,
**dadurch gekennzeichnet, dass** die Förderschnecke (3.1) mittels einer Antriebseinrichtung (3.2) antreibbar ist.

4. Vorrichtung (1) nach einem der vorhergehenden Ansprüche,
**gekennzeichnet durch** einen Drucksensor (5) zur Erfassung eines Förderdrucks, wobei der Drucksensor (5) in und/oder an einem Auslassbereich der Fördereinrichtung (3) angeordnet ist.

5. Vorrichtung (1) nach Anspruch 3 oder 4,
**dadurch gekennzeichnet, dass** die Antriebseinrichtung (3.2) mit einer elektronischen Steuereinheit gekoppelt ist.

6. Vorrichtung (1) nach einem der vorhergehenden Ansprüche,
**gekennzeichnet durch** einen der Förderschnecke (3.1) nachgeordneten regel- und/oder steuerbaren Injektionsschlauch (6).

7. Vorrichtung (1) nach Anspruch 6,
**dadurch gekennzeichnet, dass** der Injektionsschlauch (6) zumindest zwei getrennt voneinander regel- und/oder steuerbare Heizabschnitte (6.2, 6.3) aufweist.

8. Vorrichtung (1) nach Anspruch 6 oder 7,
**dadurch gekennzeichnet, dass** die Fördereinrichtung (3) und der Injektionsschlauch (6) mittels einer Flanschverbindung kraft- und formschlüssig miteinander verbunden sind.

9. Vorrichtung (1) nach einem der Ansprüche 6 bis 8,
**gekennzeichnet durch** einen Injektionspacker (7), welcher mit dem Injektionsschlauch (6) verbunden und in einem in die Bauwerkkonstruktion und/oder in den Baugrund eingebrachten Bohrloch angeordnet ist.

10. Verfahren zur Injektion eines thermoplastischen Kunststoffs in eine Bauwerkkonstruktion und/oder in einen Baugrund, insbesondere mittels einer Vorrichtung (1) nach einem der vorhergehenden Ansprüche, wobei ein Granulat gefördert und aufgeschmolzen wird,
**dadurch gekennzeichnet, dass** das Granulat einer Förderschnecke (3.1) zugeführt wird, wobei das Granulat mittels einer Fördereinrichtung (3) mit einer Förderschnecke (3.1) gefördert und gleichzeitig mittels einer Aufschmelzvorrichtung (4), die eine Anzahl von Heizelementen (4.1) umfasst, die an einem Gehäuse (3.3) der Fördereinrichtung (3) angeordnet ist, zumindest teilweise aufgeschmolzen wird.

11. Verfahren nach Anspruch 7,
**dadurch gekennzeichnet, dass** eine Temperatur des Granulats im Bereich der Förderschnecke (3.1) sowie in einem ersten regel- und/oder steuerbaren Heizabschnitt (6.2) eines Injektionsschlauchs (6) erhöht wird und anschließend in einem zweiten regel- und/oder steuerbaren Heizabschnitt (6.3) des Injektionsschlauchs (6) weitestgehend konstant gehalten wird.

12. Verfahren nach Anspruch 7 oder 8,
**dadurch gekennzeichnet, dass** das aufgeschmolzene Granulat in ein in die Bauwerkkonstruktion und/oder in den Baugrund eingebrachtes Bohrloch injiziert wird.

## Geänderte Patentansprüche

### Geänderte Patentansprüche gemäss Regel 137(2) EPÜ.

1. Vorrichtung (1) zur Injektion eines thermoplastischen Kunststoffs in eine Bauwerkkonstruktion und/oder in einen Baugrund, umfassend eine Fördereinrichtung (3) für ein aufzuschmelzendes Granulat und eine Aufschmelzvorrichtung (4) für das Granulat,
wobei die Fördereinrichtung (3) eine Förderschnecke (3.1) zum Fördern des Granulats umfasst und dass die Aufschmelzvorrichtung (4) eine Anzahl von Heizelementen (4.1) umfasst, die an einem Gehäuse (3.3) der Fördereinrichtung (3) angeordnet ist,
**gekennzeichnet durch** einen der Förderschnecke (3.1) nachgeordneten regel- und/oder steuerbaren Injektionsschlauch (6), wobei der Injektionsschlauch (6) zumindest zwei getrennt voneinander regel- und/oder steuerbare Heizabschnitte (6.2, 6.3) aufweist.

2. Vorrichtung (1) nach Anspruch 1,
**dadurch gekennzeichnet, dass** die Heizelemente (4.1) auf einer Außenseite des Gehäuses (3.3) angeordnet sind.

3. Vorrichtung (1) nach Anspruch 1 oder 2,
**dadurch gekennzeichnet, dass** die Förderschnecke (3.1) mittels einer Antriebseinrichtung (3.2) antreibbar ist.

4. Vorrichtung (1) nach einem der vorhergehenden Ansprüche,
**gekennzeichnet durch** einen Drucksensor (5) zur Erfassung eines Förder-drucks, wobei der Drucksensor (5) in und/oder an einem Auslassbereich der Fördereinrichtung (3) angeordnet ist.

5. Vorrichtung (1) nach Anspruch 3 oder 4,
**dadurch gekennzeichnet, dass** die Antriebseinrichtung (3.2) mit einer elektronischen Steuereinheit gekoppelt ist.

6. Vorrichtung (1) nach einem der vorhergehenden Ansprüche,
**dadurch gekennzeichnet, dass** die Fördereinrichtung (3) und der Injektionsschlauch (6) mittels einer Flanschverbindung kraft- und formschlüssig miteinander verbunden sind.

7. Vorrichtung (1) nach einem der vorhergehenden Ansprüche,
**gekennzeichnet durch** einen Injektionspacker (7), welcher mit dem Injektionsschlauch (6) verbunden und in einem in die Bauwerkkonstruktion und/oder in den Baugrund eingebrachten Bohrloch angeordnet ist.

8. Verfahren zur Injektion eines thermoplastischen Kunststoffs in eine Bauwerkkonstruktion und/oder in einen Baugrund, insbesondere mittels einer Vorrichtung (1) nach einem der vorhergehenden Ansprüche, wobei
- ein Granulat gefördert und aufgeschmolzen wird,
- das Granulat einer Förderschnecke (3.1) zugeführt wird,
- das Granulat mittels einer Fördereinrichtung (3) mit einer Förderschnecke (3.1) gefördert und gleichzeitig mittels einer Aufschmelzvorrichtung (4), die eine Anzahl von Heizelementen (4.1) umfasst, die an einem Gehäuse (3.3) der Fördereinrichtung (3) angeordnet ist, zumindest teilweise aufgeschmolzen wird,
**dadurch gekennzeichnet, dass** eine Temperatur des Granulats im Bereich der Förderschnecke (3.1) sowie in einem ersten regel- und/oder steuerbaren Heizabschnitt (6.2) eines Injektionsschlauchs (6) erhöht wird und anschließend in einem zweiten regel- und/oder steuerbaren Heizabschnitt (6.3) des Injektionsschlauchs (6) weitestgehend konstant gehalten wird.

9. Verfahren nach Anspruch 8,
**dadurch gekennzeichnet, dass** das aufgeschmolzene Granulat in ein in die Bauwerkkonstruktion und/oder in den Baugrund eingebrachtes Bohrloch injiziert wird.
